# FASCICULE DE BREVET EUROPEEN

(11) **EP 3 280 987 B1**
(45) Date de publication et mention de la délivrance du brevet: **21.08.2019**
(21) Numéro de dépôt: 16719243.4
(22) Date de dépôt: 11.04.2016
(51) Int. Cl.: G01M 5/00, G01D 21/00, H04L 12/00

(54) **DISPOSITIF DE CONTROLE A NOEUDS ELECTRONIQUES APTES A S'ALIMENTER ELECTRIQUEMENT ENTRE EUX ET A COMMUNIQUER ENTRE EUX**
STEUERUNGSVORRICHTUNG MIT ELEKTRONISCHEN KNOTEN MIT FÄHIGKEIT ZUR GEGENSEITIGEN ELEKTRISCHEN SPEISUNG UND ZUR KOMMUNIKATION MITEINANDER
CONTROL DEVICE WITH ELECTRONIC NODES ABLE TO SUPPLY ONE ANOTHER ELECTRICALLY AND TO COMMUNICATE WITH ONE ANOTHER

(30) Priorité: 09.04.2015 FR 1553076
(43) Date de publication de la demande: 14.02.2018
(73) Titulaire: COMMISSARIAT À L'ÉNERGIE ATOMIQUE ET AUX ÉNERGIES ALTERNATIVES, 75015 Paris (FR)
(72) Inventeur: LE BARON, Estelle, 38530 Barraux (FR); DESPESSE, Ghislain, 38340 Voreppe (FR)
(74) Mandataire: Novaimo
(86) Numéro de dépôt international: PCT/EP2016/057914
(87) Numéro de publication internationale: WO 2016/162559

(56) Documents cités:
- WO-A1-2012/097241
- DE-A1- 3 907 652
- DE-A1-102012 109 583
- US-A- 6 097 761
- US-A1- 2015 071 324

## Description

### Domaine technique de l'invention

L'invention concerne le domaine des dispositifs de contrôle ayant pour vocation de réaliser des mesures qui seront préférentiellement utilisées pour établir un état d'une structure sur laquelle le dispositif de contrôle est monté.

L'invention a pour objet plus particulièrement un dispositif de contrôle à noeuds électroniques agencés de manière adaptée.

### État de la technique

Dans le domaine de la surveillance d'une structure, il est connu d'équiper la structure à surveiller d'un capteur adapté dont les signaux peuvent être interprétés en vue de déterminer l'état de la structure surveillée.

Le document EP2012105 décrit notamment l'utilisation d'un tel capteur.

Afin de surveiller une structure, un unique capteur tel que décrit dans le document EP2012105 n'est généralement pas suffisant, et l'on doit en disposer plusieurs sur la même structure. Il reste que le positionnement présente généralement des difficultés quant à la localisation des capteurs et la communication des capteurs à une unité maîtresse pour concaténer toutes les informations.

DE102012109583, US2015/071324, WO2012/097241, US6097761 et DE3907652 montrent d'autres dispositifs connus de l'art antérieur.

### Objet de l'invention

Le but de la présente invention est de proposer une solution qui remédie à tout ou partie des inconvénients listés ci-dessus.

On tend vers ce but grâce à un dispositif de contrôle comprenant des noeuds électroniques reliés de telle sorte, qu'au moins entre deux noeuds électroniques d'extrémité, chaque noeud électronique comprend :
- une entrée d'alimentation électrique dudit noeud électronique par un noeud électronique précédent,
- une sortie d'alimentation électrique pour un noeud électronique suivant,
- un organe de mesure d'une grandeur physique,
- un organe de transfert d'une donnée représentant la grandeur physique mesurée par ledit organe de mesure utilisant comme vecteur de transmission l'entrée d'alimentation électrique dudit noeud électronique, et
- un organe de transfert de tension adapté à autoriser ou bloquer le transfert d'une tension d'alimentation présente à l'entrée d'alimentation, de l'entrée d'alimentation électrique dudit noeud vers la sortie d'alimentation électrique dudit noeud.

Selon une mise en oeuvre, chaque noeud électronique, situé entre deux noeuds électroniques d'extrémité, comporte :
- une unique entrée d'alimentation électrique reliée à une seule sortie d'alimentation électrique appartenant à un noeud électronique précédent correspondant,
- une unique sortie d'alimentation électrique reliée à une seule entrée d'alimentation appartenant à un noeud électronique suivant correspondant.

En particulier, entre les deux noeuds électroniques d'extrémité, chaque noeud électronique peut être configuré de sorte à :
- alimenter électriquement ledit noeud électronique en utilisant une tension d'alimentation présente à l'entrée d'alimentation dudit noeud électronique,
- réaliser la mesure de la grandeur physique en sollicitant l'organe de mesure dudit noeud électronique,
- provoquer la remontée de la donnée représentant la grandeur physique mesurée via l'entrée d'alimentation électrique dudit noeud électronique en utilisant l'organe de transfert dudit noeud électronique,
- transmettre, en utilisant ledit organe de transfert de tension, l'alimentation électrique de l'entrée d'alimentation électrique dudit noeud électronique à la sortie d'alimentation électrique dudit noeud électronique.

Avantageusement, les noeuds électroniques sont reliés mécaniquement en série par des éléments de liaison de telle sorte que tout couple de noeuds électroniques adjacents est associé à un des éléments de liaison reliant électriquement la sortie d'alimentation électrique de l'un des noeuds électroniques dudit couple à l'entrée d'alimentation électrique de l'autre desdits noeuds électroniques dudit couple.

Selon une réalisation, chaque élément de liaison comporte une liaison électrique bifilaire.

En particulier, chaque liaison électrique bifilaire peut comporter une âme électriquement conductrice et une gaine électriquement conductrice entourant ladite âme avec interposition d'une couche d'un matériau prédéterminé.

Avantageusement, le matériau prédéterminé est un matériau piézoélectrique.

En particulier, l'organe de mesure de la grandeur physique peut être configuré de sorte à réaliser la mesure de ladite grandeur physique sur l'un des éléments de liaison relié audit noeud électronique comportant ledit organe de mesure.

L'organe de mesure de la grandeur physique peut être configuré de sorte à réaliser la mesure de ladite grandeur physique sur l'élément de liaison reliant ledit noeud comportant l'organe de mesure audit noeud suivant.

Chaque noeud entre les noeuds d'extrémité peut comprendre, en outre, un comparateur de tension connecté à l'entrée d'alimentation électrique dudit noeud.

Selon une mise en oeuvre, la grandeur physique mesurée sur ledit un des éléments de liaison est une variation de résistance dudit un des éléments de liaison, ou une variation de capacité dudit un des éléments de liaison.

Selon une réalisation, l'organe de mesure de la grandeur physique peut être configuré de sorte à mesurer une fréquence de résonnance, un déphasage entre courant et tension à une fréquence particulière, ou peut être configuré de sorte à rechercher une fréquence pour laquelle il est obtenu un déphasage donné entre courant et tension.

Avantageusement, chaque organe de transfert est configuré pour mettre en oeuvre une transmission de la donnée correspondante par courant porteur en direction du noeud électronique précédent, via l'entrée d'alimentation électrique dudit noeud électronique équipé dudit organe de transfert.

L'invention est aussi relative à un procédé de pilotage d'un dispositif de contrôle tel que décrit comprenant les étapes suivantes, au moins mises en oeuvre par chacun des noeuds électroniques disposés entre les deux noeuds électroniques d'extrémité :
- une étape de déclenchement de l'alimentation électrique dudit noeud électronique en utilisant une tension d'alimentation présente à l'entrée d'alimentation électrique dudit noeud électronique,
- une étape de mesure de la grandeur physique en sollicitant l'organe de mesure dudit noeud électronique,
- une étape de transfert d'une donnée représentant la grandeur physique mesurée via l'entrée d'alimentation électrique dudit noeud électronique,
- une étape de transmission de l'alimentation électrique de l'entrée d'alimentation électrique dudit noeud électronique à la sortie d'alimentation électrique dudit noeud électronique, notamment pour alimenter électriquement un noeud électronique suivant par son entrée d'alimentation électrique.

De préférence, le procédé comprend une étape de commutation de l'organe de transfert de tension de sorte qu'il passe d'un premier état bloquant le transfert de la tension d'alimentation présente à l'entrée d'alimentation, de l'entrée d'alimentation électrique dudit noeud vers la sortie d'alimentation électrique dudit noeud à un deuxième état autorisant le transfert de la tension d'alimentation présente à l'entrée d'alimentation, de l'entrée d'alimentation électrique dudit noeud vers la sortie d'alimentation électrique dudit noeud.

L'invention est aussi relative à une installation comportant une structure à contrôler et au moins un dispositif de contrôle tel que décrit, ledit au moins un dispositif de contrôle étant monté sur ladite structure.

Par exemple, la structure est choisie parmi un ruban, un pipeline, un textile, une voile de bateau, une aile d'avion, un bâtiment, un câble, une corde, une poutre, une éolienne ou encore la coque d'un bateau.

Selon une mise en oeuvre de l'installation, pour ledit au moins un dispositif de contrôle :
- les noeuds électroniques sont reliés mécaniquement en série par des éléments de liaison,
- entre deux noeuds électroniques d'extrémité de la série, chaque élément de liaison comprend deux conducteurs électriques reliant électriquement une sortie d'alimentation électrique de l'un des noeuds électronique à une entrée d'alimentation électrique d'un autre des noeuds électroniques, et comprend un matériau apte à générer, ou modifier, un signal électrique mesurable au niveau desdits deux conducteurs électriques, lorsqu'une contrainte est imposée audit matériau,
- les éléments de liaison sont fixés à la structure.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue schématique d'un dispositif de contrôle selon une réalisation particulière,
- la figure 2 est une vue en coupe d'un élément de liaison utilisé dans le cadre d'une réalisation de l'invention,
- la figure 3 illustre un dispositif de contrôle incorporant l'élément de liaison selon la figure 2 configuré de sorte à former un capteur,
- la figure 4 illustre le dispositif de contrôle de la figure 3 monté sur une structure de type pipeline, c'est-à-dire illustre une installation selon l'invention,
- la figure 5 illustre un exemple particulier permettant de mettre en oeuvre une modulation de courant dans le cadre de la présente invention,
- la figure 6 illustre une réalisation particulière d'une partie du dispositif de contrôle.

### Description de modes préférentiels de l'invention

Le dispositif de contrôle 101 décrit ci-après propose, à la différence de l'art antérieur, un agencement particulier de noeuds électroniques permettant une souplesse et une ergonomie d'installation du dispositif de contrôle sur une structure à contrôler.

Par « dispositif de contrôle », on entend que ledit dispositif de contrôle est apte à être installé sur une structure, et qu'il est configuré de sorte à surveiller/contrôler cette structure, en donnant par exemple des informations quant à l'état de ladite structure.

La structure peut être de différents types, il peut s'agir d'un ruban, d'un pipeline, d'une partie d'un bâtiment, etc. Ce point sera décrit plus en détail ci-après avec des exemples.

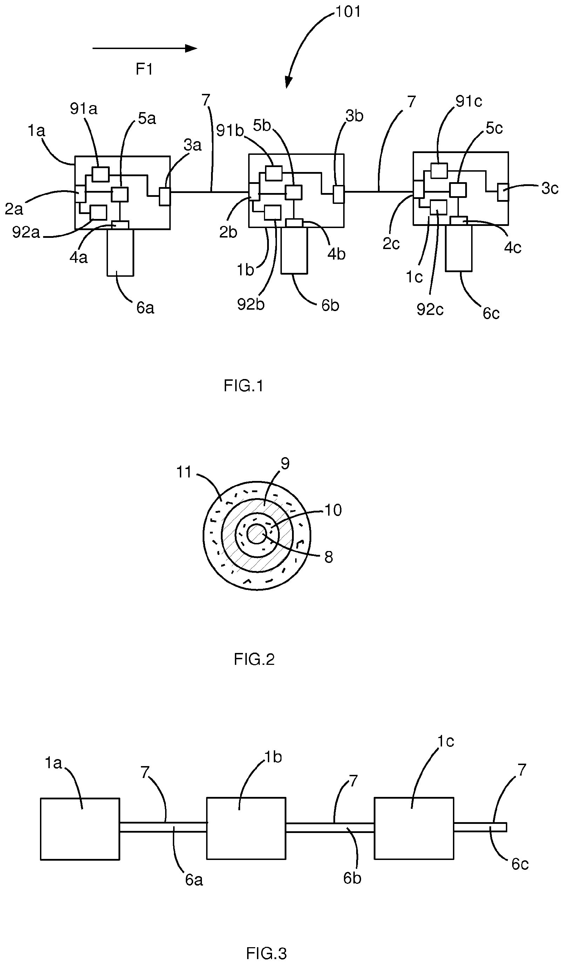

Comme illustré en figure 1, le dispositif de contrôle comprend des noeuds électroniques 1a, 1b, 1c reliés de telle sorte qu'au moins entre deux noeuds électroniques d'extrémité 1a, 1c, chaque noeud électronique 1b comprend une entrée d'alimentation électrique 2b dudit noeud électronique 1b par un noeud électronique précédent 1a (formé par le noeud électronique d'extrémité 1a dans l'exemple illustré). En outre, chaque noeud électronique 1b situé entre les deux noeuds électroniques 1a, 1c d'extrémité comporte une sortie d'alimentation électrique 3b pour un noeud électronique 1c suivant (formé par le noeud électronique d'extrémité 1c dans l'exemple illustré). En outre, chaque noeud électronique 1b situé entre les deux noeuds électroniques 1a, 1c d'extrémité comporte un organe de mesure 4b d'une grandeur physique et un organe de transfert 5b d'une donnée représentant la grandeur physique mesurée par l'organe de mesure 4b utilisant comme vecteur de transmission l'entrée d'alimentation électrique 2b dudit noeud électronique 1b. En outre, chaque noeud électronique 1b situé entre les deux noeuds électroniques 1a, 1c d'extrémité comprend un moyen, ou organe de transmission, adapté à autoriser ou bloquer le transfert d'une tension, de l'entrée d'alimentation électrique 2b dudit noeud 1b vers la sortie d'alimentation électrique 3b dudit noeud 1b. A titre d'exemple, ce moyen est un interrupteur, notamment un interrupteur commandé, en particulier un interrupteur réalisé à partir d'un ou plusieurs transistors. Ce moyen peut également être mis en oeuvre au moyen d'un composant électronique tel qu'un microcontrôleur comme cela sera décrit ci-après ou ce moyen peut être compris dans un composant électronique tel qu'un microcontrôleur. La transmission ou le transfert de tension de l'entrée d'alimentation électrique 2b dudit noeud 1b vers la sortie d'alimentation électrique 3b dudit noeud 1b est par exemple autorisé ou bloqué selon l'état de commutation de l'organe de transfert, un premier état de commutation bloquant le transfert et un deuxième état de commutation autorisant le transfert.

L'entrée et la sortie d'alimentation électrique 2b, 3b peuvent comporter, de préférence pour chaque noeud électronique incluant ou non les noeuds électroniques d'extrémité, au moins deux bornes respectivement de neutre et de phase. Les termes « neutre » et « phase » sont utilisés pour leur aspect générique, mais il peut s'agir d'une borne positive et d'une borne négative en cas d'alimentation par une tension signée non alternative. La terre n'a pas de raison d'être connectée aux noeuds électroniques, cependant les éléments de liaison décrits ci-après et éventuellement les noeuds électroniques peuvent être placés dans une gaine/tresse ou autre ramené au potentiel de terre pour limiter l'émission de perturbations électromagnétiques et immuniser le système vis-à-vis de perturbations électromagnétiques extérieures.

On comprend alors que les noeuds électroniques évoqués ci-dessus, au moins ceux situés entre les deux noeuds électroniques d'extrémité (plus éventuellement lesdits deux noeuds électroniques d'extrémité) permettent chacun de réaliser trois fonctions à savoir : transmettre ou bloquer l'alimentation provenant d'un noeud électronique précédent vers un noeud électronique suivant, mesurer la grandeur physique et transmettre la donnée représentant la grandeur physique mesurée à un noeud électronique précédent, notamment par courant porteur. Ainsi, le dispositif de contrôle peut être facilement installé sur une structure sans qu'il y ait un besoin de référencer les noeuds électroniques les uns par rapport aux autres puisqu'ils sont déjà organisés et reliés entre eux de manière adaptée.

Le type d'agencement particulier décrit précédemment permet notamment de connaître la position relative des noeuds électroniques les uns par rapport aux autres puisque chaque noeud électronique, hormis l'un des noeuds électroniques d'extrémité sera alimenté électriquement par un autre noeud électronique du dispositif.

L'un des noeuds électroniques 1a d'extrémité est appelé noeud électronique de début 1a et l'autre des noeuds électronique 1c d'extrémité est appelé noeud électronique de fin 1c. Les notions de « précédent » et de « suivant », ou encore de « aval » et de « amont » utilisés dans la présente description sont données à partir du noeud électronique de début 1a en direction du noeud électronique de fin 1c, ceci se visualise notamment selon la flèche F1 de la figure 1. En particulier, la flèche F1 représente aussi la direction d'alimentation électrique dans le sens où les noeuds électroniques seront préférentiellement successivement alimentés électriquement de manière échelonnée selon cette direction.

L'organe de mesure 4b peut, par exemple, être relié à un capteur 6b apte à générer/modifier un signal mesurable par ledit organe de mesure 4b. Bien entendu, chaque noeud électronique, incluant ou pas les noeuds électroniques d'extrémité 1a, 1c, peut comporter l'organe de mesure 4a, 4b, 4c relié à un capteur 6a, 6b, 6c correspondant. On comprend que chaque capteur 6a, 6b, 6c est notamment associé à un unique noeud électronique.

L'organe de mesure 4a, 4b, 4c de la grandeur physique (de préférence chaque organe de mesure desdits noeuds électroniques incluant les noeuds électroniques d'extrémité) peut être configuré de sorte à mesurer une fréquence de résonnance, un déphasage entre courant et tension à une fréquence particulière, ou est configuré de sorte à rechercher une fréquence pour laquelle il est obtenu un déphasage donné entre courant et tension. D'autres mesures classiques peuvent être effectuées, telle que la mesure d'une résistance d'un capteur résistif ou piézorésistif, la mesure de capacité sur un capteur capacitif, la mesure de l'inductance sur un capteur inductif, l'atténuation d'un capteur optique, etc. Ces informations mesurées peuvent, par exemple, être représentatives d'une contrainte, notamment une déformation, appliquée à un capteur 6a, 6b, 6c. Alternativement, la ou les informations mesurées peuvent être mesurées par un accéléromètre, un gyromètre, un capteur de pression, un capteur de déformation, un capteur de déplacement, un capteur de température, un capteur d'humidité, un capteur de pH, un capteur de gaz, etc.

En particulier, chaque noeud électronique 1b situé entre les noeuds d'extrémité 1a, 1c peut être configuré de sorte à ce que le transfert de la donnée représentant la grandeur physique mesurée par l'organe de mesure 4b dudit noeud électronique 1b soit réalisé avant que le noeud électronique 1c suivant ne transfère sa propre donnée représentant la grandeur physique mesurée par l'organe de mesure dudit noeud électronique suivant ou ne réalise sa propre mesure. Ceci permet de facilement discrétiser les données reçues par un système maître, par exemple formé par l'un des noeuds électroniques d'extrémité initiateur d'une alimentation électrique d'un des noeuds électroniques disposé entre les deux noeuds électroniques d'extrémité, ou par exemple relié à l'un des noeuds électroniques d'extrémité et initiateur d'une alimentation électrique dudit noeud électronique d'extrémité. Ainsi, on comprend que le dispositif de contrôle permet d'éviter les risques de collision des données du fait que son fonctionnement implique dans ce cas particulier l'utilisation intrinsèque d'un séquençage temporel de la transmission des données et de l'alimentation électrique des noeuds. Autrement dit, les données représentant chacune une grandeur physique mesurée sont transférées à un système maître qui les reçoit dans l'ordre d'alimentation électrique desdits noeuds électroniques qui est séquentiel.

En outre, entre les deux noeuds électroniques d'extrémités 1a, 1c, chaque noeud électronique 1b est préférentiellement configuré de telle sorte que son organe de transfert 5b puisse réceptionner d'un noeud électronique suivant 1c, notamment via la sortie d'alimentation électrique 3b dudit noeud électronique 1b, la donnée représentative de la mesure effectuée par l'organe de mesure 4c dudit noeud électronique suivant 1c et la transmettre à un noeud électronique précédent 1a en utilisant comme vecteur de transmission l'entrée d'alimentation électrique 2b dudit noeud électronique 1b. Ainsi, on comprend que le dispositif de contrôle est avantageusement configuré de telle sorte que toutes les données représentant les grandeurs physiques mesurées au niveau des différents noeuds électroniques seront remontées à l'un des noeuds électroniques d'extrémité 1a, le séquençage de réception des données étant tel qu'il est ensuite trivial de savoir à quel noeud électronique appartient la donnée reçue. Autrement dit, lorsqu'un des noeuds électroniques transfère la donnée qui lui est associée via son entrée d'alimentation électrique, le noeud précédent audit un des noeuds électroniques reçoit ladite donnée sur sa sortie d'alimentation électrique qu'il peut à son tour retransférer à sa propre entrée d'alimentation électrique en utilisant son organe de transfert.

Selon une mise en oeuvre, l'un des noeuds d'extrémité 1a comporte préférentiellement une sortie d'alimentation électrique 3a reliée à une entrée d'alimentation électrique 2b d'un noeud électronique 1b qui le suit, et l'autre des noeuds d'extrémité 1c comporte préférentiellement au moins une entrée d'alimentation électrique 2c reliée à une sortie d'alimentation électrique 3b d'un noeud électronique 1b qui le précède. Le noeud électronique de début 1a peut aussi comporter une entrée d'alimentation électrique 2a et le noeud électronique de fin 1c peut aussi comporter une sortie d'alimentation électrique 3c. Autrement dit, tous les noeuds électroniques du dispositif peuvent être identiques et comporter chacun une entrée d'alimentation électrique 2a, 2b, 2c, une sortie d'alimentation électrique 3a, 3b, 3c, un organe de mesure 4a, 4b, 4c, un organe de transfert 5a, 5b, 5c, et un organe de transfert de tension 91a, 91b, 91c permettant de transmettre ou bloquer l'alimentation comme cela est décrit en relation avec la figure 1. Toutefois, l'organe de transfert de tension 91a est optionnel dans le noeud d'extrémité 1a. L'organe de transfert de tension 91c est aussi optionnel dans le noeud d'extrémité 1c.

En fait, le dispositif de contrôle peut se présenter sous la forme d'une guirlande de noeuds électroniques 1a, 1b, 1c décalés successivement selon la longueur de la guirlande. Autrement dit, les noeuds électroniques sont reliés mécaniquement et électriquement en série, notamment par des éléments de liaison 7.

Par ailleurs, lorsque les noeuds électroniques sont tous identiques, il est possible à partir d'une bobine de noeuds électroniques de couper une guirlande/série telle que décrite de la longueur souhaitée pour former ledit dispositif de contrôle.

La connexion en forme de guirlande peut de manière plus générale se décrire de la manière suivante: chaque noeud électronique 1b, situé entre deux noeuds électroniques d'extrémité 1a, 1c, comporte :
- une unique entrée d'alimentation électrique 2b reliée à une seule sortie d'alimentation électrique 3a appartenant à un noeud électronique précédent 1a correspondant,
- une unique sortie d'alimentation électrique 3b reliée à une seule entrée d'alimentation 2c appartenant à un noeud électronique 1c suivant correspondant.

On comprend de ce qui a été dit ci-dessus qu'un des noeuds d'extrémité est un noeud précédent et que l'autre des noeuds d'extrémité est un noeud suivant.

Selon une réalisation, les noeuds électroniques 1a, 1b, 1c sont préférentiellement reliés mécaniquement en série par des éléments de liaison 7 de telle sorte que tout couple de noeuds électroniques adjacents est associé à un des éléments de liaison 7 reliant électriquement la sortie d'alimentation électrique de l'un des noeuds électroniques dudit couple à l'entrée d'alimentation de l'autre desdits noeuds électroniques dudit couple. On comprend alors que les éléments de liaison 7 permettent aussi de réaliser la fonction de conducteurs électriques d'alimentation électrique des noeuds électroniques. Autrement dit, les noeuds électroniques (incluant alors les deux noeuds électroniques d'extrémité et les noeuds électroniques situés entre ces deux noeuds d'extrémité) sont agencés sous la forme d'une pluralité de couples de noeuds électroniques adjacents comportant chacun deux noeuds électroniques adjacents reliés par un élément de liaison reliant la sortie de l'un des noeuds électroniques dudit couple à l'entrée de l'autre desdits noeuds électroniques dudit couple. Hormis les deux noeuds électroniques d'extrémité, chaque noeud électronique appartient à deux couples distincts. Dans l'exemple de la figure 1, on a deux couples formés par le couple noeud électronique 1a et noeud électronique 1b, et par le couple noeud électronique 1b et noeud électronique 1c.

De manière générale, la liaison électrique entre les noeuds électroniques est réalisée en cascade, ceci permettant de ne pas multiplier les sources d'énergies, une seule source étant capable d'alimenter électriquement tous les noeuds électroniques du dispositif de contrôle en la connectant à l'un des noeuds électroniques d'extrémité 1a. Cette source d'énergie peut être une alimentation électrique externe, une batterie ou une énergie électrique issue d'énergie renouvelable. En outre, le fait que les noeuds sont alimentés électriquement de manière séquentielle permet de réduire la consommation électrique du dispositif de contrôle, en particulier grâce au fait que, lorsqu'un noeud est en train d'effectuer une mesure, les noeuds suivants, hormis éventuellement le noeud suivant connecté directement après le noeud effectuant la mesure, ne sont pas alimentés.

Selon une réalisation particulière, entre les deux noeuds électroniques d'extrémité 1a, 1c, chaque noeud électronique 1b est configuré de sorte à :
- alimenter électriquement ledit noeud électronique 1b en utilisant une tension d'alimentation présente à l'entrée d'alimentation 2b dudit noeud électronique 1b,
- réaliser la mesure du paramètre physique en sollicitant l'organe de mesure 4b dudit noeud électronique 1b,
- provoquer la remontée de la donnée représentant la grandeur physique mesurée via l'entrée d'alimentation électrique 2b dudit noeud électronique 1b en utilisant l'organe de transfert 5b dudit noeud électronique 1b,
- transmettre l'alimentation électrique de l'entrée d'alimentation électrique 2b dudit noeud électronique 1b à la sortie d'alimentation électrique 3b dudit noeud électronique 1b, notamment pour alimenter électriquement un noeud électronique 1c suivant par son entrée l'alimentation électrique 2c.

Eventuellement, entre les deux noeuds électroniques d'extrémité 1a, 1c, chaque noeud électronique 1b est aussi configuré de sorte à détecter une alimentation électrique dudit noeud électronique 1b et à mettre en oeuvre les quatre tirets immédiatement ci-dessus après que l'alimentation électrique ait été détectée.

Bien entendu, les fonctions de réalisation de la mesure, de remontée de la donnée et de transmission de l'alimentation électrique nécessitent que ledit noeud électronique correspondant soit alimenté électriquement pour être réalisées.

En fait, le dispositif de contrôle peut comporter un module de pilotage (non représenté) configuré de sorte à réaliser les quatre tirets immédiatement ci-dessus et l'éventuelle détection de l'alimentation électrique déclenchant la mise en oeuvre des actions associées aux quatre tirets ci-dessus.

Selon une réalisation, les deux noeuds électroniques d'extrémité 1a, 1c comportent aussi un module de pilotage tel que décrit ci-dessus. Dans une variante de réalisation le noeud d'extrémité de fin 1c ne comporte pas de sortie d'alimentation électrique et ne réalise donc pas la transmission de l'alimentation électrique.

En ce sens, l'invention est aussi relative à un procédé de pilotage d'un dispositif de contrôle tel que décrit comprenant les étapes suivantes au moins mises en oeuvre par chacun des noeuds électroniques 1b disposés entre les deux noeuds électroniques d'extrémité 1a, 1c :
- une étape de déclenchement de l'alimentation électrique dudit noeud électronique 1b en utilisant la tension d'alimentation présente à l'entrée d'alimentation 2b dudit noeud électronique 1b,
- une étape de mesure de la grandeur physique en sollicitant l'organe de mesure 4b dudit noeud électronique 1b,
- une étape de transfert d'une donnée représentant la grandeur physique mesurée via l'entrée d'alimentation électrique 2b dudit noeud électronique 1b,
- une étape de transmission de l'alimentation électrique de l'entrée d'alimentation électrique 2b dudit noeud électronique 1b à la sortie d'alimentation électrique 3b dudit noeud électronique 1b, notamment pour alimenter électriquement un noeud électronique 1c suivant par son entrée d'alimentation électrique 2c.

Avantageusement, le procédé comprend une étape de commutation de l'organe de transfert de tension 91b de sorte que cet organe passe d'un premier état bloquant le transfert de la tension d'alimentation présente à l'entrée d'alimentation, de l'entrée d'alimentation électrique dudit noeud vers la sortie d'alimentation électrique dudit noeud à un deuxième état autorisant le transfert de la tension d'alimentation présente à l'entrée d'alimentation, de l'entrée d'alimentation électrique dudit noeud vers la sortie d'alimentation électrique dudit noeud.

En particulier, dans un cas, les étapes de mesure et de transfert de la donnée représentant la valeur mesurée sont réalisées avant le transfert ou la transmission de l'alimentation électrique au noeud suivant. Dans un autre cas, l'alimentation électrique est transmise au noeud suivant avant les étapes de mesure et de transfert de la donnée représentant la valeur mesurée.

Selon une mise en oeuvre, chaque élément de liaison 7 tel que décrit précédemment comporte une liaison bifilaire, notamment en vue de connecter électriquement deux noeuds électroniques d'un même couple.

Une liaison bifilaire au sens de la présente description comporte deux conducteurs électriques d'alimentation, notamment dont l'un est destiné au neutre et l'autre à la phase.

Selon une réalisation particulière, illustrée en figure 2, chaque liaison électrique bifilaire comporte une âme 8 électriquement conductrice et une gaine 9 électriquement conductrice entourant ladite âme 8 (notamment selon sa longueur), avec interposition d'une couche d'un matériau, par exemple électriquement isolant, prédéterminé 10. Une gaine 11 électriquement isolante peut recouvrir la gaine 9 électriquement conductrice. Il est aussi possible d'imaginer un film en deux dimensions isolant (par exemple électriquement isolant) avec deux électrodes.

Selon un perfectionnement, l'organe de mesure de la grandeur physique est configuré de sorte à réaliser la mesure de ladite grandeur physique sur l'un des éléments de liaison relié audit noeud électronique comportant ledit organe de mesure. Autrement dit, au moins une partie de l'élément de liaison 7 peut former un capteur dont un signal est mesurable par l'organe de mesure d'un noeud électronique associé. Dans ce cas, les éléments 6a, 6b, 6c de la figure 1 sont directement intégrés aux éléments de liaison 7 reliant les noeuds électroniques 1a, 1b, 1c comme le montre la figure 3 et un élément de liaison additionnel 7a identique aux éléments de liaison 7b est relié au noeud d'extrémité 1c.

Selon un exemple du perfectionnement, ladite grandeur physique mesurée sur ledit un des éléments de liaison 7 est une variation de résistance dudit un des éléments de liaison 7, ou une variation de capacité dudit un des éléments de liaison 7.

Dans un premier cas du perfectionnement, où la mesure de la grandeur physique est réalisée sur l'élément de liaison relié à la sortie dudit noeud électronique correspondant (c'est-à-dire celui qui effectue la mesure), cette réalisation peut impliquer qu'il faille appliquer une tension particulière à l'élément de liaison qui, selon le niveau, peut être détectée par le noeud électronique suivant et éventuellement comprise par ce dernier comme étant une volonté d'alimentation électrique dudit noeud électronique suivant. En ce sens, le noeud électronique suivant peut, le cas échéant, soit comparer la tension arrivant à son entrée d'alimentation à un seuil de discrimination (notamment lorsque la tension appliquée pour une mesure de la grandeur physique est inférieure à la tension d'alimentation nécessaire pour alimenter électriquement un noeud électronique suivant, ce dernier sait qu'il ne doit pas se mettre en route), soit être équipé d'un compteur temporel permettant de décaler dans le temps l'alimentation électrique nécessaire à la mesure par ledit noeud électronique suivant pour permettre au noeud électronique correspondant (celui qui effectue la mesure) relié directement au noeud électronique suivant d'avoir le temps de réaliser sa mesure sur l'élément de liaison entre lui-même et ledit noeud électronique suivant, puis de transmettre ladite mesure à un noeud électronique amont auquel il est directement relié par un autre élément de liaison correspondant. Dans le cas où chaque noeud compare la tension d'alimentation présente sur son entrée d'alimentation pour savoir s'il se met en marche ou non, on comprend que chaque noeud comporte un comparateur de tension 92a, 92b, 92c relié à son entrée d'alimentation électrique. Tous les noeuds électroniques du dispositif peuvent comporter chacun un comparateur 92a, 92b, 92c. Toutefois, le comparateur 92a est optionnel dans le noeud d'extrémité 1a. Le comparateur 92c est aussi optionnel dans le noeud d'extrémité 1c.

Dans un deuxième cas du perfectionnement, où la mesure serait réalisée par un noeud électronique correspondant sur un élément de liaison reliant ledit noeud électronique correspondant à un noeud amont, il est par exemple possible que le noeud amont fixe un courant et que le noeud correspondant mesure comme grandeur physique une chute de tension qui pourra être interprétée comme l'application d'une contrainte physique au niveau dudit élément de liaison. Ces premier et deuxième cas sont notamment valables lorsque l'élément de liaison comporte deux conducteurs électriques autorisant d'une part l'alimentation électrique d'un autre noeud électronique ou dudit noeud électronique correspondant, et d'autre part la mesure de ladite grandeur physique.

Selon une réalisation, chaque élément de liaison comporte un organe piézoélectrique, cet organe piézoélectrique formant le capteur évoqué précédemment.

La fonction capteur de contrainte/déformation par utilisation de matériaux piézoélectriques est une approche relativement classique et connue. Une des solutions pour mesurer la contrainte/déformation qui s'exerce sur un corps est de coller un matériau piézoélectrique sur le corps et de mesurer sa fréquence de résonance, l'élongation/compression du matériau piézoélectrique (qui suit la déformation du corps) engendre une modification de la fréquence de résonance du matériau piézoélectrique lui-même et à partir de celle-ci on peut remonter au taux de déformation du matériau piézoélectrique puis à celui du corps. On retrouve cette méthode de mesure par exemple dans les capteurs SAW de l'anglais « Surface Acoustic Wave » pour ondes acoustiques ou élastiques de surface.

Une autre solution, dans le cas où le matériau piézoélectrique présente un coefficient de couplage électromécanique relativement élevé, consiste à mesurer l'impédance mécanique du corps support au travers d'une mesure de l'impédance électrique du matériau piézoélectrique, les deux étant reliés via le coefficient de couplage on peut remonter à l'impédance mécanique. A partir de l'impédance mécanique, via les caractéristiques du matériau constituant le corps support, on peut remonter à la contrainte/déformation du corps support.

Encore une autre solution consiste par exemple à soumettre le matériau piézoélectrique à une tension sinusoïdale qui crée une vibration mécanique qui se traduit par une déformation locale de la structure. La zone de propagation de l'onde vibratoire créée dépend de la nature de la structure, de son épaisseur et de sa complexité. La réponse de la structure à l'excitation vibratoire peut permettre de remonter à sa déformation/contrainte. Cette réaction mécanique du corps peut être surveillée par mesure du champ électrique généré par le matériau piézoélectrique lui-même, par exemple juste après l'excitation.

Encore une autre solution consiste à mesurer directement la tension et/ou le courant généré par le piézoélectrique lorsqu'il est déformé. Avec cette méthode il est difficile d'obtenir la contrainte/déformation absolue, par contre elle permet de mesurer facilement des variations dynamiques de contrainte/déformation.

Encore une autre solution consiste à mesurer la résistance d'une jauge résistive ou piézo-résistive pour en déduire la contrainte/déformation du matériau support.

Il en résulte que l'homme du métier saura adapter l'organe de mesure décrit ci-avant pour qu'il puisse réaliser une mesure selon l'une des solutions ci-dessus lorsqu'un matériau piézoélectrique est utilisé.

Il est nécessaire d'avoir un bon couplage électromécanique entre la structure à surveiller/contrôler et le capteur. Il est donc d'usage d'utiliser des colles cyanoacrylate ou époxy, qui une fois durcies sont permanentes. Le profil d'impédance électromécanique est non seulement lié, à l'intégrité de la structure, mais aussi à la nature de l'interface entre la structure et le capteur. La résonance du capteur, qui pour rappel est seulement lié aux dimensions de ce dernier, varie en fréquence et en amplitude en fonction de l'état de contrainte ou d'endommagement d'une structure. C'est cet offset de l'impédance qu'il est préférable d'étudier par une approche 'in situ' de contrôle.

Tous types de matériaux piézoélectriques peuvent être utilisés : PZT (acronyme de Titano-Zirconante de Plomb), PMN-PT (acronyme de Lead Magnésium Niobate-Lead Titanate), AlN (acronyme d'Aluminium Nitride), PVDF (acronyme de PolyVinyleDenediFluoride), les nanofils piezoélectriques, les nanoparticules piezorésistives etc.

Selon un exemple particulier, où chaque liaison bifilaire comporte l'âme 8 et la gaine 9 avec interposition de la couche en matériau prédéterminé, l'organe piézoélectrique peut être formé par ladite couche en matériau prédéterminé. Autrement dit, le matériau prédéterminé 10 est un matériau piézoélectrique. On comprend alors qu'une sollicitation/contrainte dudit élément de liaison 7 permet de mesurer entre l'âme 8 et la gaine 9 un signal pouvant être interprété comme représentatif de la sollicitation. Ce signal peut, par exemple, être une valeur de tension ou une variation de valeur de tension. Dans cet exemple particulier, chaque liaison bifilaire peut être conformée selon le câble coaxial décrit dans le document US4,609,845.

On comprend de ce qui a été dit ci-dessus que chacun des noeuds électroniques est actif, c'est-à-dire qu'il possède une propre intelligence. Un noeud électronique au sens de la présente description peut donc être un composant électronique. En ce sens, chaque noeud électronique peut être un microcontrôleur ou un ASIC (circuits intégrés) qui s'insère entre deux éléments de liaison 7 comportant notamment chacun un matériau piézoélectrique. Pour certaines applications, il peut être avantageux que les noeuds électroniques présentent chacun des dimensions maximales, en terme de section, de l'ordre de, ou inférieure à celle, des éléments de liaison de telle sorte que l'ensemble puisse former un ruban/câble de section relativement constante sur sa longueur et puisse, par exemple, s'insérer dans une gaine ou une encoche de taille sensiblement constante tout du long.

Selon une réalisation, chaque organe de transfert 5a, 5b, 5c, notamment des noeuds électroniques incluant ou pas les noeuds électroniques d'extrémité, est configuré pour mettre en oeuvre une transmission de la donnée représentant la grandeur physique mesurée correspondante par courant porteur en direction du noeud électronique précédent, via l'entrée dudit noeud électronique équipé dudit organe de transfert. L'utilisation du courant porteur est avantageuse car elle permet le transfert d'une information sur une ligne d'alimentation électrique sans perturbation de l'alimentation électrique et surtout d'éviter d'utiliser un fil supplémentaire dédié à la communication. Ainsi, l'organe de transfert peut comporter un générateur de trame à envoyer par modulation de courant. En outre comme évoqué précédemment, chaque organe de transfert peut aussi recevoir une trame d'un autre noeud électronique via la sortie d'alimentation électrique du noeud électronique portant ledit organe de transfert, et être configuré de sorte à transférer cette trame via l'entrée d'alimentation électrique du noeud électronique portant ledit organe de transfert.

Dans certain cas, la modulation de courant du noeud 1b sur son entrée 2b peut être observée jusqu'au système d'alimentation de la ligne qui alimente le premier noeud 1a via son entrée d'alimentation 2a. Dans ce cas, les noeuds amonts du noeud 1b n'ont rien de particulier à faire pour retransmettre la donnée provenant du noeud 1b, la variation de courant qui est fourni au noeud aval par la sortie 3a se retrouve naturellement sur leur entrée 2a si aucun filtrage particulier n'est effectué sur l'alimentation par le noeud 1a. Au final, le système d'alimentation du premier noeud 1a, peut décoder et traiter directement les informations provenant successivement de chacun des capteurs.

Il est décrit ci-après un exemple particulier de fonctionnement du dispositif de contrôle. Un interrogateur/système maître, formé par un premier noeud électronique d'extrémité d'une guirlande de noeuds électroniques, effectue une mesure (par exemple de fréquence de résonance, de déphasage entre courant et tension à une fréquence particulière, la recherche d'une fréquence pour laquelle on a un déphasage donné entre courant et tension, la résistance électrique, la capacité électrique) sur un premier tronçon piézoélectrique/piézorésistif/résistif/capacitif formé par l'élément de liaison reliant le premier noeud électronique de la guirlande à un deuxième noeud électronique de la guirlande. Pendant cette mesure par le premier noeud sur le premier tronçon, le deuxième noeud n'applique pas de tension continue sur un second tronçon piézoélectrique/piézo-résistif/résistif/capacitif formé par l'élément de liaison reliant le deuxième noeud électronique de la guirlande à un troisième noeud électronique de la guirlande, par exemple, du fait que la tension présente sur le premier tronçon, et donc sur l'entrée d'alimentation du deuxième noeud, n'est pas supérieure à un seuil. Une fois sa mesure terminée, l'interrogateur maintient une tension continue sur le premier tronçon piézoélectrique/piézo-résistif/résistif/capacitif ce qui permet d'alimenter électriquement et, par exemple du fait que cette tension continue est supérieur au seuil susmentionné, de mettre en marche le deuxième noeud électronique qui se situe entre le premier tronçon piézoélectrique/piézo-résistif/résistif/capacitif et le second tronçon piézoélectrique/piézo-résistif/résistif/capacitif. Le deuxième noeud électronique effectue une mesure de la grandeur physique (par exemple de fréquence de résonance, de déphasage entre courant et tension à une fréquence particulière, la recherche d'une fréquence pour laquelle on a un déphasage donné entre courant et tension, la résistance électrique, la capacité électrique) sur le second tronçon piézoélectrique/piézorésistif/résistif/capacitif. Le deuxième noeud électronique remonte ensuite à l'interrogateur (le premier noeud dans l'exemple) la donnée représentant la grandeur physique mesurée par le deuxième noeud électronique par une modulation de courant sur sa ligne d'alimentation, c'est-à-dire qu'il transmet l'information par son entrée d'alimentation. Pendant la mesure par le deuxième noeud sur le deuxième tronçon, et pendant la transmission au premier noeud de la donnée représentant la grandeur physique mesurée par le deuxième noeud, le troisième noeud n'applique pas de tension continue sur un troisième tronçon piézoélectrique/piézo-résistif/résistif/capacitif formé par l'élément de liaison reliant le troisième noeud électronique de la guirlande à un quatrième noeud électronique de la guirlande, par exemple, du fait que la tension présente sur le deuxième tronçon, et donc sur l'entrée d'alimentation du troisième noeud, n'est pas supérieure à un seuil. Une fois que sont terminées la mesure par le deuxième noeud et la transmission au premier noeud de la donnée représentant la grandeur physique mesurée par le deuxième noeud, le deuxième noeud électronique maintient une tension continue permettant d'alimenter et de mettre en marche le troisième noeud électronique situé entre le deuxième tronçon et le troisième tronçon piézoélectrique/piézorésistif/résistif/capacitif. Le troisième noeud électronique effectue une mesure (par exemple de fréquence de résonance, de déphasage entre courant et tension à une fréquence particulière, la recherche d'une fréquence pour laquelle on a un déphasage donné entre courant et tension, la résistance électrique, la capacité électrique) sur le troisième tronçon piézoélectrique/piézo-résistif/résistif/capacitif, puis il remonte au deuxième noeud électronique la donnée mesurée par une modulation de courant sur sa ligne d'alimentation, c'est-à-dire qu'il transmet l'information par son entrée d'alimentation, qui se reporte naturellement sur la ligne d'alimentation du deuxième noeud électronique et au final au système maitre. Pendant la mesure par le troisième noeud sur le troisième tronçon, et pendant la transmission au deuxième noeud de la donnée représentant la grandeur physique mesurée par le troisième noeud, le quatrième noeud n'applique pas de tension continue sur un quatrième tronçon piézoélectrique/piézo-résistif/résistif/capacitif formé par l'élément de liaison reliant le quatrième noeud électronique de la guirlande à un cinquième noeud électronique de la guirlande, par exemple, du fait que la tension présente sur le troisième tronçon, et donc sur l'entrée d'alimentation du quatrième noeud, n'est pas supérieure à un seuil. Une fois que sont terminées la mesure par le troisième noeud et la transmission au deuxième noeud de la donnée représentant la grandeur physique mesurée par le troisième noeud, le troisième noeud électronique maintient une tension continue permettant d'alimenter et de mettre en marche le quatrième noeud électronique situé en aval. Ce principe s'applique jusqu'à l'arrivée à un noeud électronique d'extrémité opposé au premier noeud électronique. Une fois toutes les mesures des grandeurs physiques effectuées et remontées à l'interrogateur/système maitre (le premier noeud électronique dans l'exemple), ce dernier met à zéro sa sortie d'alimentation, ce qui coupe l'alimentation des différents noeuds électronique. Au final, le système maitre a reçu, les unes après les autres, les données représentant les grandeurs physiques mesurées par les différents noeuds électroniques successifs. En fonction de l'ordre d'arrivée de la trame comprenant la mesure, il peut identifier de quel noeud électronique elle provient.

Par « tronçon piézoélectrique/piézo-résistif/résistif/capacitif », on entend que le tronçon concerné est choisi parmi un élément piézoélectrique ou piézo-résistif ou résistif ou capacitif qui autorise une mesure adaptée sur ledit tronçon par l'organe de mesure correspondant.

Il a été donné comme exemple un premier noeud électronique qui agit comme un système maître, en alternative, le système maître est indépendant de la série de noeuds électroniques et le premier noeud transmettra toutes les données reçues, à partir des noeuds électroniques situés en aval de lui-même selon la direction d'alimentation électrique, au système maître en utilisant une modulation de courant appliquée à sa propre entrée d'alimentation électrique.

Toujours dans le cadre de cet exemple, chaque noeud électronique, hormis éventuellement le noeud électronique de début, peut par exemple moduler un courant sur le tronçon piézoélectrique/piézorésistif/résistif/capacitif amont qui lui apporte l'énergie, en amont d'un filtre qui alimente ledit noeud électronique et qui évite que les variations de consommation dudit noeud électronique lui-même, notamment quand il effectue sa mesure sur le tronçon piézoélectrique suivant, puissent être interprétées par le noeud électronique précédent comme une trame d'information utile.

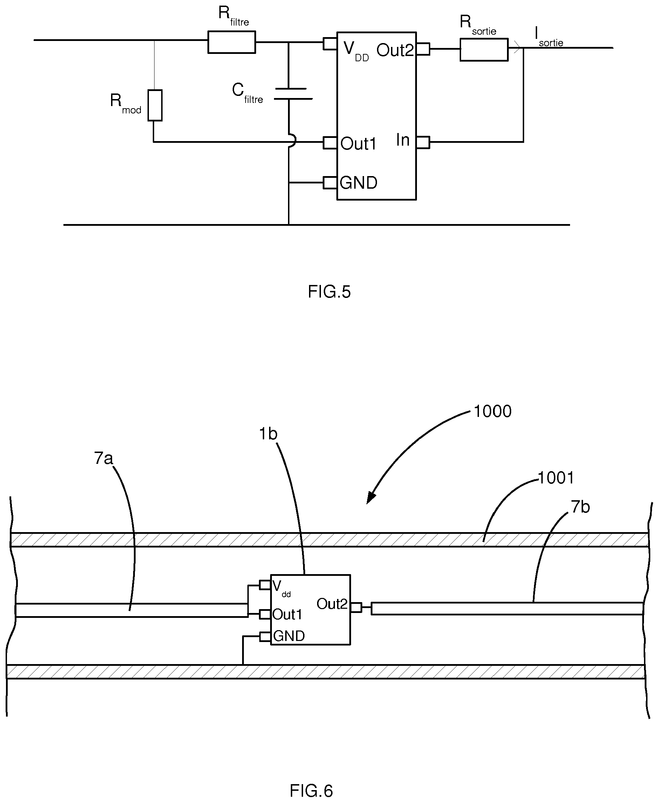

La modulation de courant peut être mise en oeuvre par un système du type de la figure 5 dans lequel le filtre R_{filtre}-C_{filtre} évite d'une part que les composantes hautes fréquences consommées par le microcontrôleur du noeud électronique concerné remontent sur la ligne et d'autre part que la modulation de courant perturbe l'alimentation du microcontrôleur du noeud électronique concerné. La modulation de courant est effectuée ici en tirant ou pas un courant sur la ligne d'alimentation via une résistance Rmod qui est placée ou non à GND (la masse) via l'état Out1 d'un port de sortie du microcontrôleur du noeud électronique concerné. La ligne d'alimentation est quant à elle reliée à l'entrée Vdd du microcontrôleur. L'entrée Vdd du microcontrôleur est reliée à un élément de liaison amont et la sortie out 2 est reliée à un élément de liaison aval. L'alimentation du tronçon suivant s'effectue par un port de sortie Out2 au travers d'une résistance Rsortie. Cette résistance qui joue le rôle d'une résistance de shunt permet, via l'entrée Analogique/Numérique In du microcontrôleur du noeud électronique concerné, de déterminer le courant transitant sur le tronçon de ligne aval. Cette mesure de courant permet aussi bien de mesurer/d'identifier une caractéristique du tronçon de ligne, que de lire une donnée numérique issue d'une modulation de courant du noeud électronique suivant. Le tronçon de ligne correspond à l'élément de liaison aval (par exemple un piézo-résistif, le courant avec laquelle se charge la capacité Cfiltre du noeud suivant initialement déchargée peut alors être une image de la résistance du tronçon de ligne qui elle-même est une image de la contrainte mécanique appliqué au tronçon).

En outre, dans l'exemple de la figure 5, on comprend que le microcontrôleur du noeud sert d'organe de transfert de la tension de l'entrée d'alimentation électrique vers la sortie d'alimentation électrique du noeud ou comprend un organe de transfert de la tension de l'entrée d'alimentation électrique vers la sortie d'alimentation électrique du noeud.

Dans l'exemple de fonctionnement, chaque noeud électronique (incluant ou non le noeud électronique de début) réalise, notamment successivement, les actions suivantes :
a) attendre d'avoir une tension d'alimentation effective et stable (mesure éventuelle terminée sur le tronçon piézoélectrique/piézorésistif/résistif/capacitif amont),
b) effectuer une mesure sur le tronçon piézoélectrique/piézorésistif/résistif/capacitif aval (ou amont en variante) de la grandeur physique associée,
c) effectuer une modulation de courant sur son entrée d'alimentation pour remonter une donnée représentant la grandeur physique mesurée,
d) appliquer une tension continue sur sa sortie d'alimentation pour alimenter et déclencher le fonctionnement du noeud électronique aval jusqu'à ce que sa propre alimentation soit coupée (en option : le noeud électronique lit les données des noeuds avals, les traite éventuellement, et les retransmet au noeud amont)
e) quant l'alimentation électrique dudit noeud électronique est coupée, ledit noeud électronique retourne au point a).

Il a été décrit ci-avant le fait que tout ou partie des noeuds électroniques était capable de mesurer une grandeur physique représentative d'une contrainte telle qu'une déformation. Alternativement ou en combinaison, tout ou partie des noeuds électroniques comporte les moyens nécessaires (organes de mesure adaptés) à la mesure d'autre chose, à savoir par exemple : une pression, une température, une contrainte/déformation selon n'importe quelle direction, un pH ou autre paramètre chimique, une accélération, un champ magnétique ou encore d'autres paramètres physiques. Il est aussi possible que les grandeurs physiques mesurée ne soient pas toutes les mêmes, par exemple certain noeuds électroniques pourraient être apte à mesurer une température, d'autres une pression, d'autres une contrainte, etc.

Un élément de liaison peut avoir une fonction multi-capteurs, par exemple être apte à mesurer aussi bien une température qu'une déformation. Dans certains cas, la manière d'interroger un même élément sensible peut permettre d'obtenir plusieurs grandeurs physiques, par exemple sur un matériau piézoélectrique on peut dans certains cas différencier la grandeur physique mesurée (en mesurant par exemple l'impédance du capteur à une fréquence donnée pour obtenir la température et à une autre fréquence pour obtenir la déformation). Dans d'autres cas, le tronçon (l'élément de liaison) peut combiner plusieurs matériaux/caractéristiques pour faire apparaître différentes propriétés physiques. Ainsi, un matériau piézoélectrique peut être recouvert d'une électrode thermo-résistive, il est alors possible de retrouver la contrainte au sein du matériau piézoélectrique en mesurant sa fréquence de résonance et la température en mesurant la résistance statique de l'électrode. Il est possible aussi de coupler un matériau magnétostrictif à un matériau piézoélectrique pour mesurer le champ magnétique : le champ magnétique déforme le matériau magnétostrictif qui déforme le matériau piézoélectrique qui lui est accolé, la mesure de la déformation du matériau piézoélectrique est alors une image du champ magnétique. Il est bien sûr possible de faire bien d'autres combinaisons possibles.

Autrement dit, la triple fonction communication, transfert d'énergie et capteur pourrait être porté par d'autres types de capteur que ceux précédemment décrits, comme par exemple :
- des jauges de contraintes simples ou piézo-résistives : il est alors possible d'avoir, sur un tronçon, une piste résistive allé et une piste résistive retour séparée, piste qui permette de communiquer et de transférer de l'énergie de noeud à noeud et dont la valeur de résistance est une image de la contrainte/déformation,
- des capteurs électrostatiques : dans ce cas des électrodes peuvent permettre de transmettre l'information et l'énergie et la valeur capacitive entre les électrodes peut être une image de la pression, de la température ou de la déformation/contrainte.

Il résulte de tout ce qui a été dit ci-dessus que le dispositif de contrôle propose avantageusement un découpage de capteurs (par exemple les éléments de liaison contenant un matériau piézoélectrique) autorisant la mesure de grandeurs physiques (de types linéique ou surfacique) en tronçons interrogeables séparément. Ceci permet une discrétisation avec des points de mesure plus ou moins compacts. Ainsi, le dispositif de contrôle tel que décrit permet par exemple de localiser plus ou moins finement un défaut. Les capteurs de types linéique ou surfacique sont connectés en série par l'intermédiaire d'un noeud électronique qui dans un sens transfère l'énergie (la tension) et dans l'autre sens remonte l'information, notamment sous forme de modulation d'un courant, et au moment opportun procède à la mesure sur le tronçon, notamment aval, qui lui est connecté.

Dans la présente description, les différents exemples, mises en oeuvre, cas particuliers peuvent être combinés, sauf si bien entendu l'agencement en résultant apparaît comme incompatible à l'homme du métier.

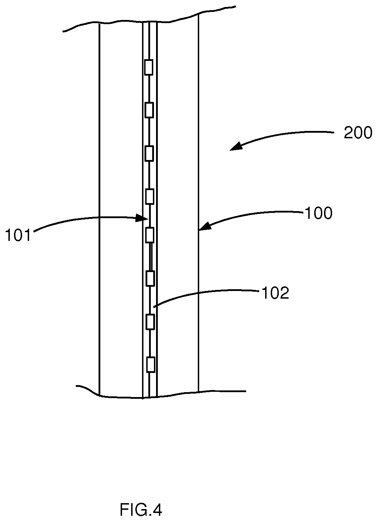

L'invention est aussi relative à une installation 200 comportant une structure 100 à contrôler et au moins un dispositif de contrôle 101 tel que décrit (figure 4), ledit au moins un dispositif de contrôle étant monté sur ladite structure.

La structure peut être choisie parmi, notamment tout ou partie de, un ruban, un câble, une corde, un pipeline, un textile, un drapeau, une voile de bateau, une aile d'avion, un bâtiment, un pont, un barrage, une poutre, une éolienne, ou encore la coque d'un bateau, etc. Bien entendu, ces exemples ne sont pas limitatifs.

Selon une mise en oeuvre de la structure/installation, pour ledit au moins un dispositif de contrôle, les noeuds électroniques sont reliés mécaniquement en série par des éléments de liaison, et entre deux noeuds électroniques d'extrémité de la série, chaque élément de liaison comprend deux conducteurs électriques reliant électriquement une sortie d'alimentation électrique de l'un des noeuds électroniques à une entrée d'alimentation électrique d'un autre des noeuds électroniques, et comprend un matériau apte à générer, ou modifier, un signal électrique mesurable au niveau desdits deux conducteurs électriques, lorsqu'une contrainte (par exemple mécanique ou thermique) est imposée audit matériau. Les éléments de liaison sont fixés à la structure, ainsi, lorsque la structure est mise en contrainte au moins au niveau d'un élément de liaison, il est possible de remonter une donnée permettant de qualifier cette contrainte. Chaque noeud électronique peut comporter un ou plusieurs moyens de mesures complémentaires au tronçon, comme par exemple un capteur de température pour pouvoir compenser une dérive thermique connue du capteur de contrainte formé par le tronçon.

Il est clair que l'installation peut comporter une pluralité de dispositifs de contrôle. En ce sens, tout ce qui est dit pour l'un des dispositifs de contrôle peut s'appliquer à tous les autres en regard de l'interaction avec la structure.

Le contrôle ou surveillance des structures est connu dans le domaine par l'acronyme SHM pour l'anglais « Structural Health Monitoring ».

L'invention s'applique tout particulièrement dans le domaine du transport de fluide par pipeline, notamment lorsque le pipeline est immergé en mer et susceptible de se déformer par les contraintes imposées par le courant marin. Ceci est d'autant plus vrai lorsque le pipeline permet de remonter le fluide à une station en surface et se présente de manière sensiblement verticale. L'invention telle que décrite utilise des composants robustes (ligne électrique), noeuds électroniques, qui peuvent être soumis à de fortes contraintes mécaniques comme c'est le cas des pipelines immergés pouvant être présents à des profondeurs de l'ordre de 3000m sous la surface de l'eau où les pressions sont importantes jusqu'à 1500bar. De plus, le dispositif tel que proposé peut facilement être encapsulé pour être protégé de l'eau salée ou autres corrosions dues aux gaz ou pétrole. Le dispositif permet ainsi de contrôler les contraintes locales d'un pipeline et de préconiser des réparations préventives qu'en cas de besoin, et pas automatiques comme cela est fait à ce jour.

En particulier, dans le cadre du pipeline 100 (figure 4), le dispositif de contrôle 101 peut se présenter sous une forme d'un élément allongé et le pipeline 100 peut comporter une rainure 102 ou encoche qui s'étend selon la longueur du pipeline dans laquelle est encastré, ou collé le dispositif de contrôle 101. Dans le cadre des pipelines, ces derniers comportent généralement des câbles d'armature dans lesquels il est possible de prévoir une rainure qui est alors, dans le cadre de la présente invention équipée d'un dispositif de contrôle qui s'étend longitudinalement dans la rainure selon la direction longitudinale de la rainure.

L'invention s'applique aussi dans le domaine de l'aéronautique ou du génie civil avec l'implémentation de réseaux de capteurs piézoélectriques collés sur les structures composites ou multicouches.

Selon un autre exemple de réalisation, une pluralité de dispositifs de contrôle tels que décrits sont agencés à la manière d'une matrice pour par exemple surveiller une surface particulière, incluant ladite matrice de dispositifs de contrôle de la structure. Ceci peut aussi être décliné en trois dimensions pour surveiller les contraintes imposées à un volume de la structure (par exemple un bloc de béton).

Dans le cadre des exemples d'utilisation sur des structures comme un ruban ou une voile, lorsque deux dispositifs de contrôle sont montés de part et d'autre du ruban ou de la voile, il est possible de déduire des rayons de courbures de la voile ou du ruban.

En multipliant le nombre de dispositifs de contrôle et en les plaçant à des endroits judicieux, il est possible de remonter à la forme complète du ruban ou de la voile.

Selon une variante, les éléments de liaison évoqués ci-dessus et destinés à participer à la mesure de la grandeur physique correspondante peuvent comporter un film piézoélectrique/piézorésistif/résistif/capacitif inséré entre deux électrodes qui servent à la fois à mesurer la grandeur physique, à transmettre une alimentation électrique et des informations telles qu'au moins une des données évoquées précédemment.

Selon une variante, chaque noeud électronique comporte un identifiant qui lui est unique. Cet identifiant peut aussi être remonté concomitamment à la ou les données représentant la ou les mesures effectuées par le ou les organes de mesure dudit noeud électronique, par exemple au sein d'une même trame. Ceci permet par exemple de faciliter le traitement des données reçues.

Le noeud électronique, et notamment chaque noeud électronique de la pluralité de noeuds électroniques, peut être constitué :
- d'un microcontrôleur à faible nombre de broches (inférieur à 30 broches, par exemple le PIC10F320T de Microchip® ou encore le STM32F042F4 de ST microelectronics®), qui intègre :
   ∘ une unité de calcul,
   ∘ au moins une première broche de sortie permettant par exemple de piloter un courant consommé pour la modulation de courant (broche de sortie reliée à la masse par une résistance : quand la broche est à un niveau logique haut (Vdd), elle fournit un courant à la résistance, par exemple 10 mA et quand elle est à l'état bas (0 V), elle ne fournit plus de courant, il suffit alors de piloter la broche selon un protocole de communication déterminé, par exemple le protocole RS-485 ou 1-wire),
   ∘ au moins une seconde broche de sortie permettant d'interroger le tronçon suivant (excitation : par exemple en fréquence) puis de maintenir un niveau de tension pour alimenter le noeud suivant et ainsi déclencher le fonctionnement du noeud suivant,
   ∘ au moins une entrée de conversion analogique/numérique pour numériser le/les signaux mesurés (périphérique de conversion au sein du microcontrôleur),
   ∘ optionnellement une mesure de température interne,
   ∘ un périphérique de communication
- d'un ou plusieurs capteurs : température, pression, accélération, champ magnétique, contrainte, lumière, humidité, déformation, pression.

Si on cherche simplement à mesurer la température le long de la ligne, le noeud électronique pourrait se limiter à un simple microcontrôleur intégrant une mesure de température interne. Les broches d'alimentation du microcontrôleur (GND et VDD) seraient alors connectées à un tronçon précédent non instrumenté et le tronçon suivant non instrumenté serait connecté au GND et à une broche de sortie du microcontrôleur. Enfin, une autre broche de sortie, serait connectée par l'intermédiaire ou non d'une résistance au GND ou VDD du microcontrôleur pour permettre la modulation du courant consommé. En alternative, la variation du courant consommé utile à la modulation de courant pourrait s'effectuer via la mise en fonctionnement contrôlé de fonctions gourmandes du microcontrôleur ou l'utilisation de fonctions de pull-up/Pull-down interne au microcontrôleur (connexion d'une sortie du microcontrôleur à une entrée présentant un courant de tirage vers un état défini). La figure 6 illustre une telle solution, le noeud électronique pourrait être intégré à l'intérieur d'un câble coaxial 1000 comprenant un blindage 1001 formé par exemple par une gaine notamment tressée et par exemple en cuivre. Le noeud électronique 1b est relié à un élément de liaison 7a amont et à un élément de liaison 7b aval reliant chacun ledit noeud électronique 1b respectivement à un noeud électronique amont (non représenté) et à un noeud électronique aval (non représenté). Sur cette figure 6, la borne Vdd représente au moins en partie l'entrée d'alimentation dudit noeud électronique 1b et la borne out 2 représente au moins en partie la sortie d'alimentation dudit noeud électronique. La borne Gnd représente la mise à la masse et la borne out1 représente une sortie permettant la remontée d'information(s), notamment par modulation de courant, à un noeud électronique précédent.

## Revendications

1. Dispositif de contrôle (101) comprenant des noeuds électroniques (1a, 1b, 1c) reliés de telle sorte, qu'au moins entre deux noeuds électroniques d'extrémité (1a, 1c), chaque noeud électronique (1b) comprend :
- une entrée d'alimentation électrique (2b) dudit noeud électronique (1b) par un noeud électronique précédent (1a),
- une sortie d'alimentation électrique (3b) pour un noeud électronique suivant (1c),
- un organe de mesure (4b) d'une grandeur physique,
- un organe de transfert (5b) d'une donnée représentant la grandeur physique mesurée par ledit organe de mesure (4b) utilisant comme vecteur de transmission l'entrée d'alimentation électrique (2b) dudit noeud électronique (1b),
**caractérisé en ce qu'**au moins entre deux noeuds électroniques d'extrémité (1a, 1c), chaque noeud électronique (1b) comprend par ailleurs :
- un organe de transfert de tension (91b) adapté à autoriser ou bloquer le transfert d'une tension d'alimentation présente à l'entrée d'alimentation, de l'entrée d'alimentation électrique dudit noeud vers la sortie d'alimentation électrique dudit noeud.

2. Dispositif selon la revendication précédente, **caractérisé en ce que** chaque noeud électronique (1b), situé entre deux noeuds électroniques d'extrémité (1a, 1c), comporte :
- une unique entrée d'alimentation électrique (2b) reliée à une seule sortie d'alimentation électrique (3a) appartenant à un noeud électronique précédent (1a) correspondant,
- une unique sortie d'alimentation électrique (3b) reliée à une seule entrée d'alimentation (2c) appartenant à un noeud électronique (1c) suivant correspondant.

3. Dispositif selon l'une quelconque des revendications précédentes, **caractérisé en ce qu'**entre les deux noeuds électroniques d'extrémité (1a, 1c), chaque noeud électronique (1b) est configuré de sorte à :
- alimenter électriquement ledit noeud électronique (1b) en utilisant une tension d'alimentation présente à l'entrée d'alimentation (2b) dudit noeud électronique (1b),
- réaliser la mesure de la grandeur physique en sollicitant l'organe de mesure (4b) dudit noeud électronique (1b),
- provoquer la remontée de la donnée représentant la grandeur physique mesurée via l'entrée d'alimentation électrique (2b) dudit noeud électronique (1b) en utilisant l'organe de transfert (5b) dudit noeud électronique (1b),
- transmettre, en utilisant ledit organe de transfert de tension, l'alimentation électrique de l'entrée d'alimentation électrique (2b) dudit noeud électronique (1b) à la sortie d'alimentation (3b) électrique dudit noeud électronique (1b).

4. Dispositif selon l'une quelconque des revendications précédentes, **caractérisé en ce que** les noeuds électroniques (1a, 1b, 1c) sont reliés mécaniquement en série par des éléments de liaison (7) de telle sorte que tout couple de noeuds électroniques adjacents est associé à un des éléments de liaison (7) reliant électriquement la sortie d'alimentation électrique de l'un des noeuds électroniques dudit couple à l'entrée d'alimentation électrique de l'autre desdits noeuds électroniques dudit couple.

5. Dispositif selon la revendication précédente, **caractérisé en ce que** chaque élément de liaison (7) comporte une liaison électrique bifilaire.

6. Dispositif selon la revendication précédente, **caractérisé en ce que** chaque liaison électrique bifilaire comporte une âme (8) électriquement conductrice et une gaine (9) électriquement conductrice entourant ladite âme (8) avec interposition d'une couche d'un matériau prédéterminé (10), notamment un matériau piézoélectrique.

7. Dispositif selon l'une des revendications 4 à 6, **caractérisé en ce que** l'organe de mesure (4b) de la grandeur physique est configuré de sorte à réaliser la mesure de ladite grandeur physique sur l'un des éléments de liaison (7) relié audit noeud électronique (1b) comportant ledit organe de mesure (4b).

8. Dispositif selon la revendication 7, **caractérisé en ce que** l'organe de mesure (4b) de la grandeur physique est configuré de sorte à réaliser la mesure de ladite grandeur physique sur l'élément de liaison reliant ledit noeud comportant l'organe de mesure audit noeud suivant et/ou **caractérisé en ce que** chaque noeud (1b) entre les noeuds d'extrémité (1a, 1c) comprend, en outre, un comparateur de tension (92b) connecté à l'entrée d'alimentation électrique (2b) dudit noeud.

9. Dispositif selon la revendication 7 ou 8, **caractérisé en ce que** ladite grandeur physique mesurée sur ledit un des éléments de liaison (7) est une variation de résistance dudit un des éléments de liaison (7), ou une variation de capacité dudit un des éléments de liaison (7).

10. Dispositif selon l'une des revendications précédentes, **caractérisé en ce que** l'organe de mesure (4b) de la grandeur physique est configuré de sorte à mesurer une fréquence de résonnance, un déphasage entre courant et tension à une fréquence particulière, ou est configuré de sorte à rechercher une fréquence pour laquelle il est obtenu un déphasage donné entre courant et tension et/ou **en ce que** chaque organe de transfert (5b) est configuré pour mettre en oeuvre une transmission de la donnée correspondante par courant porteur en direction du noeud électronique précédent (1a), via l'entrée d'alimentation électrique (2b) dudit noeud électronique (1b) équipé dudit organe de transfert (5b).

11. Procédé de pilotage d'un dispositif de contrôle selon l'une quelconque des revendications précédentes comprenant les étapes suivantes, au moins mises en oeuvre par chacun des noeuds électroniques (1b) disposés entre les deux noeuds électroniques d'extrémité (1a, 1c) :
- une étape de déclenchement de l'alimentation électrique dudit noeud électronique (1b) en utilisant une tension d'alimentation présente à l'entrée d'alimentation électrique (2b) dudit noeud électronique (1b),
- une étape de mesure de la grandeur physique en sollicitant l'organe de mesure (4b) dudit noeud électronique (1b),
- une étape de transfert d'une donnée représentant la grandeur physique mesurée via l'entrée d'alimentation électrique (2b) dudit noeud électronique (1b),
- une étape de transmission de l'alimentation électrique de l'entrée d'alimentation électrique (2b) dudit noeud électronique (1b) à la sortie d'alimentation électrique (3b) dudit noeud électronique (1b), notamment pour alimenter électriquement un noeud électronique suivant (1c) par son entrée d'alimentation électrique (2c).

12. Procédé de pilotage selon la revendication précédente, **caractérisé en ce qu'**il comprend une étape de commutation de l'organe de transfert de tension (91b) de sorte que cet organe passe d'un premier état bloquant le transfert de la tension d'alimentation présente à l'entrée d'alimentation, de l'entrée d'alimentation électrique dudit noeud vers la sortie d'alimentation électrique dudit noeud à un deuxième état autorisant le transfert de la tension d'alimentation présente à l'entrée d'alimentation, de l'entrée d'alimentation électrique dudit noeud vers la sortie d'alimentation électrique dudit noeud.

13. Installation (200) comportant une structure (100) à contrôler et au moins un dispositif (101) de contrôle selon l'une des revendications 1 à 10, ledit au moins un dispositif de contrôle étant monté sur ladite structure.

14. Installation selon la revendication précédente, **caractérisée en ce que** la structure est choisie parmi un ruban, un pipeline, un textile, une voile de bateau, une aile d'avion, un bâtiment, un câble, une corde, une poutre, une éolienne ou encore la coque d'un bateau.

15. Installation selon l'une des revendications 13 ou 14, **caractérisée en ce que**, pour ledit au moins un dispositif de contrôle :
- les noeuds électroniques (1a, 1b, 1c) sont reliés mécaniquement en série par des éléments de liaison (7),
- entre deux noeuds électroniques d'extrémité (1a, 1c) de la série, chaque élément de liaison (7) comprend deux conducteurs électriques (8, 9) reliant électriquement une sortie d'alimentation électrique de l'un des noeuds électronique à une entrée d'alimentation électrique d'un autre des noeuds électroniques, et comprend un matériau apte à générer, ou modifier, un signal électrique mesurable au niveau desdits deux conducteurs électriques (8, 9), lorsqu'une contrainte est imposée audit matériau,
- les éléments de liaison (7) sont fixés à la structure.

## Patentansprüche

1. Steuerungsvorrichtung (101), umfassend elektronische Knoten (1a, 1b, 1c), die derart verbunden sind, dass mindestens zwischen zwei elektronischen Endknoten (1a, 1c) jeder elektronische Knoten (1b) umfasst:
- einen Eingang zur elektrischen Speisung (2b) des elektronischen Knotens (1b) durch einen vorhergehenden elektronischen Knoten (1a),
- einen Ausgang zur elektrischen Speisung (3b) für einen folgenden elektronischen Knoten (lc),
- ein Element zum Messen (4b) einer physikalischen Größe,
- ein Element zur Übertragung (5b) eines Datums, das die von dem Messelement (4b) gemessene physikalische Größe darstellt, wobei als Übertragungsvektor der Eingang zur elektrischen Speisung (2b) des elektronischen Knotens (1b) verwendet wird,
**dadurch gekennzeichnet, dass** mindestens zwischen zwei elektronischen Endknoten (1a, 1c) jeder elektronische Knoten (1b) überdies umfasst:
- ein Spannungsübertragungselement (91b), das dazu vorgesehen ist, die Übertragung einer Speisespannung, die am Speiseeingang vorhanden ist, vom Eingang zur elektrischen Speisung des Knotens zum Ausgang zur elektrischen Speisung des Knotens zu gestatten oder zu blockieren.

2. Vorrichtung nach dem vorhergehenden Anspruch, **dadurch gekennzeichnet, dass** jeder elektronische Knoten (1b), der sich zwischen zwei elektronischen Endknoten (1a, 1c) befindet, umfasst:
- einen einzigen elektrischen Speiseeingang (2b), der mit einem einzigen elektrischen Speiseausgang (3a) verbunden ist, der einem entsprechenden vorhergehenden elektronischen Knoten (1a) angehört,
- einen einzigen elektrischen Speiseausgang (3b), der mit einem einzigen Speiseeingang (2c) verbunden ist, der einem entsprechenden folgenden elektronischen Knoten (1c) angehört.

3. Vorrichtung nach einem der vorhergehenden Ansprüche, **dadurch gekennzeichnet, dass** zwischen den zwei elektronischen Endknoten (1a, 1c) jeder elektronische Knoten (1b) eingerichtet ist, um:
- elektrisch den elektronischen Knoten (1b) unter Verwendung einer Speisespannung, die am Speiseeingang (2b) des elektronischen Knotens (1b) vorhanden ist, zu speisen,
- die Messung der physikalischen Größe unter Beanspruchung des Messelements (4b) des elektronischen Knotens (1b) durchzuführen,
- die Rückkehr des Datums, das die gemessene physikalische Größe darstellt, über den elektrischen Speiseeingang (2b) des elektronischen Knotens (1b) unter Verwendung des Übertragungselements (5b) des elektronischen Knotens (1b) hervorzurufen,
- unter Verwendung des Spannungsübertragungselements die elektrische Speisung vom elektrischen Speiseeingang (2b) des elektronischen Knotens (1b) zum elektrischen Speiseausgang (3b) des elektronischen Knotens (1b) zu übertragen.

4. Vorrichtung nach einem der vorhergehenden Ansprüche, **dadurch gekennzeichnet, dass** die elektronischen Knoten (1a, 1b, 1c) mechanisch in Serie durch Verbindungselemente (7) verbunden sind, so dass jedes Paar von aneinandergrenzenden elektronischen Knoten einem der Verbindungselemente (7) zugeordnet ist, der elektrisch den elektrischen Speiseausgang eines der elektronischen Knoten des Paars mit dem elektrischen Speiseeingang des anderen der elektronischen Knoten des Paars verbindet.

5. Vorrichtung nach dem vorhergehenden Anspruch, **dadurch gekennzeichnet, dass** jedes Verbindungselement (7) eine elektrische Zweidrahtverbindung umfasst.

6. Vorrichtung nach dem vorhergehenden Anspruch, **dadurch gekennzeichnet, dass** jede elektrische Zweidrahtverbindung einen elektrisch leitenden Kern (8) und einen elektrisch leitenden Mantel (9) umfasst, der den Kern (8) umgibt, unter Zwischenfügen einer Schicht aus einem vorbestimmten Material (10), insbesondere einem piezoelektrischen Material.

7. Vorrichtung nach einem der Ansprüche 4 bis 6, **dadurch gekennzeichnet, dass** das Element zum Messen (4b) der physikalischen Größe eingerichtet ist, um die Messung der physikalischen Größe an einem der Verbindungselemente (7) durchzuführen, das mit dem elektronischen Knoten (1b), umfassend das Messelement (4b), verbunden ist.

8. Vorrichtung nach Anspruch 7, **dadurch gekennzeichnet, dass** das Element zum Messen (4b) der physikalischen Größe eingerichtet ist, um die Messung der physikalischen Größe an dem Verbindungselement durchzuführen, das den Knoten, umfassend das Messelement, mit dem folgenden Knoten verbindet, und/oder **dadurch gekennzeichnet, dass** jeder Knoten (1b) zwischen den Endknoten (1a, 1c) ferner einen Spannungskomparator (92b) umfasst, der an den elektrischen Speiseeingang (2b) des Knotens angeschlossen ist.

9. Vorrichtung nach Anspruch 7 oder 8, **dadurch gekennzeichnet, dass** die an einem der Verbindungselemente (7) gemessene physikalische Größe eine Widerstandsänderung des einen der Verbindungselemente (7) oder eine Kapazitätsänderung des einen der Verbindungselemente (7) ist.

10. Vorrichtung nach einem der vorhergehenden Ansprüche, **dadurch gekennzeichnet, dass** das Messelement (4b) der physikalischen Größe eingerichtet ist, um eine Resonanzfrequenz, eine Phasenverschiebung zwischen Strom und Spannung bei einer besonderen Frequenz zu messen, oder eingerichtet ist, um eine Frequenz zu suchen, bei der eine gegebene Phasenverschiebung zwischen Strom und Spannung erhalten wird, und/oder dass jedes Übertragungselement (5b) eingerichtet ist, um eine Übertragung des entsprechenden Datums durch Trägerstrom in Richtung des vorhergehenden elektronischen Knotens (1a) über den elektrischen Speiseeingang (2b) des elektronischen Knotens (1b), der mit dem Übertragungselement (5b) ausgestattet ist, einzusetzen.

11. Verfahren zur Steuerung einer Steuerungsvorrichtung nach einem der vorhergehenden Ansprüche, umfassend die folgenden Schritte, die zumindest von jedem der elektronischen Knoten (1b), die zwischen den zwei elektronischen Endknoten (1a, 1c) angeordnet sind, eingesetzt werden:
- ein Schritt des Auslösens der elektrischen Speisung des elektronischen Knotens (1b) unter Verwendung einer Speisespannung, die am elektrischen Speiseeingang (2b) des elektronischen Knotens (1b) vorhanden ist
- einen Schritt der Messung der physikalischen Größe unter Beanspruchung des Messelements (4b) des elektronischen Knotens (1b),
- einen Schritt der Übertragung eines Datums, das die gemessene physikalische Größe darstellt, über den elektrischen Speiseeingang (2b) des elektronischen Knotens (1b),
- einen Schritt der Übertragung der elektrischen Speisung vom elektrischen Speiseeingang (2b) des elektronischen Knotens (1b) zum elektrischen Speiseausgang (3b) des elektronischen Knotens (1b), um insbesondere einen folgenden elektronischen Knoten (1c) über seinen elektrischen Speiseeingang (2c) elektrisch zu speisen.

12. Steuerungsverfahren nach dem vorhergehenden Anspruch, **dadurch gekennzeichnet, dass** es einen Schritt des Umschaltens des Spannungsübertragungselements (91b) umfasst, so dass dieses Element von einem ersten Zustand, der die Übertragung der am Speiseeingang vorhandenen Speisespannung vom elektrischen Speiseeingang des Knotens zum elektrischen Speiseausgang des Knotens blockiert, in einen zweiten Zustand übergeht, der die Übertragung der am Speiseeingang vorhandenen Speisespannung vom elektrischen Speiseeingang des Knotens zum elektrischen Speiseausgang des Knotens gestattet.

13. Anlage (200), umfassend eine zu steuernde Struktur (100) und mindestens eine Steuerungsvorrichtung (101) nach einem der Ansprüche 1 bis 10, wobei die mindestens eine Steuerungsvorrichtung auf der Struktur montiert ist.

14. Anlage nach dem vorhergehenden Anspruch, **dadurch gekennzeichnet, dass** die Struktur unter einem Band, einer Rohrleitung, einem Stoff, einem Bootssegel, einem Flugzeugflügel, einem Gebäude, einem Kabel, einem Seil, einem Träger, einem Windrad oder auch einem Schiffsrumpf ausgewählt ist.

15. Anlage nach einem der Ansprüche 13 oder 14, **dadurch gekennzeichnet, dass** bei der mindestens einen Steuerungsvorrichtung:
- die elektronischen Knoten (1a, 1b, 1c) mechanisch in Serie durch Verbindungselemente (7) verbunden sind,
- zwischen zwei elektronischen Endknoten (1a, 1c) der Serie jedes Verbindungselement (7) zwei elektrische Leiter (8, 9) umfasst, die elektrisch einen elektrischen Speiseausgang eines der elektronischen Knoten mit einem elektrischen Speiseeingang eines anderen der elektronischen Knoten verbindet, und ein Material umfasst, das geeignet ist, ein elektrisches Signal, das im Bereich der zwei elektrischen Leiter (8, 9) messbar ist, wenn eine Spannung dem Material auferlegt wird, zu erzeugen oder zu verändern,
- die Verbindungselemente (7) an der Struktur befestigt sind.

## Claims

1. Control device (101) comprising electronic nodes (1a, 1b, 1c) that are connected such that, at least between two electronic end nodes (1a, 1c), each electronic node (1b) comprises:
- a power supply input (2b) for said electronic node (1b) to be supplied with power by a preceding electronic node (1a);
- a power supply output (3b) for a subsequent electronic node (1c);
- a member (4b) for measuring a physical quantity;
- a member (5b) for transferring a datum representing the physical quantity measured by said measurement member (4b) using, as a transmission vector, the power supply input (2b) of said electronic node (1b),
**characterized in that**, at least between two electronic end nodes (1a, 1c), each electronic node (1b) further comprises:
- a voltage transfer member (91b) that is suitable for allowing or preventing the transfer of a supply voltage that is present at the power supply input from the power supply input of said node to the power supply output of said node.

2. Device according to the preceding claim, **characterized in that** each electronic node (1b), located between two electronic end nodes (1a, 1c), includes:
- a single power supply input (2b) that is connected to a single power supply output (3a) belonging to a corresponding preceding electronic node (1a);
- a single power supply output (3b) that is connected to a single power supply input (2c) belonging to a corresponding subsequent electronic node (1c).

3. Device according to either of the preceding claims, **characterized in that**, between the two electronic end nodes (1a, 1c), each electronic node (1b) is configured so as:
- to supply power to said electronic node (1b) by using a supply voltage that is present at the power supply input (2b) of said electronic node (1b);
- to measure the physical quantity by employing the measurement member (4b) of said electronic node (1b);
- to return the datum representing the measured physical quantity via the power supply input (2b) of said electronic node (1b) by using the transfer member (5b) of said electronic node (1b);
- to transmit, by using said voltage transfer member, the power supply from the power supply input (2b) of said electronic node (1b) to the power supply output (3b) of said electronic node (1b).

4. Device according to any one of the preceding claims, **characterized in that** the electronic nodes (1a, 1b, 1c) are mechanically connected in series by connecting elements (7) such that any pair of adjacent electronic nodes is associated with one of the connecting elements (7) electrically connecting the power supply output of one of the electronic nodes of said pair to the power supply input of the other of said electronic nodes of said pair.

5. Device according to the preceding claim, **characterized in that** each connecting element (7) includes a two-wire electrical connection.

6. Device according to the preceding claim, **characterized in that** each two-wire electrical connection includes an electrically conductive core (8) and an electrically conductive sheath (9) surrounding said core (8) with the interposition of a layer of a predetermined material (10), in particular a piezoelectric material.

7. Device according to one of Claims 4 to 6, **characterized in that** the member (4b) for measuring the physical quantity is configured so as to measure said physical quantity on one of the connecting elements (7) that is connected to said electronic node (1b) including said measurement member (4b).

8. Device according to Claim 7, **characterized in that** the member (4b) for measuring the physical quantity is configured so as to measure said physical quantity on the connecting element connecting said node including the measurement member to said subsequent node and/or **characterized in that** each node (1b) between the end nodes (1a, 1c) further comprises a voltage comparator (92b) that is connected to the power supply input (2b) of said node.

9. Device according to Claim 7 or 8, **characterized in that** said physical quantity that is measured on said one of the connecting elements (7) is a variation in the resistance of said one of the connecting elements (7) or a variation in the capacitance of said one of the connecting elements (7).

10. Device according to one of the preceding claims, **characterized in that** the member (4b) for measuring the physical quantity is configured so as to measure a resonant frequency, a phase shift between current and voltage at a particular frequency, or is configured so as to search for a frequency for which a given phase shift between current and voltage is obtained and/or **in that** each transfer member (5b) is configured to implement an operation of transmitting the corresponding datum by carrier current in the direction of the preceding electronic node (1a) via the power supply input (2b) of said electronic node (1b) that is provided with said transfer member (5b).

11. Method for driving a control device according to any one of the preceding claims comprising the following steps, at least implemented by each of the electronic nodes (1b) arranged between the two electronic end nodes (1a, 1c):
- a step of triggering the supply of power to said electronic node (1b) by using a supply voltage that is present at the power supply input (2b) of said electronic node (1b);
- a step of measuring the physical quantity by employing the measurement member (4b) of said electronic node (1b);
- a step of transferring a datum representing the measured physical quantity via the power supply input (2b) of said electronic node (1b);
- a step of transmitting the power supply from the power supply input (2b) of said electronic node (1b) to the power supply output (3b) of said electronic node (1b), in particular to supply power to a subsequent electronic node (1c) via its power supply input (2c).

12. Driving method according to the preceding claim, **characterized in that** it comprises a step of switching the voltage transfer member (91b) such that this member transitions from a first state preventing the transfer of the supply voltage present at the power supply input from the power supply input of said node to the power supply output of said node to a second state allowing the transfer of the supply voltage present at the power supply input from the power supply input of said node to the power supply output of said node.

13. Installation (200) including a structure (100) to be controlled and at least one control device (101) according to one of Claims 1 to 10, said at least one control device being mounted on said structure.

14. Installation according to the preceding claim, **characterized in that** the structure is chosen from a ribbon, a pipeline, a textile, a boat sail, an aircraft wing, a building, a cable, a rope, a beam, a wind turbine or the hull of a boat.

15. Installation according to either of Claims 13 and 14, **characterized in that**, for said at least one control device:
- the electronic nodes (1a, 1b, 1c) are mechanically connected in series by connecting elements (7);
- between two electronic end nodes (1a, 1c) of the series, each connecting element (7) comprises two electrical conductors (8, 9) electrically connecting a power supply output of one of the electronic nodes to a power supply input of another of the electronic nodes, and comprises a material that is capable of generating, or modifying, an electrical signal that is measurable on said two electrical conductors (8, 9) when said material is subjected to a stress;
- the connecting elements (7) are attached to the structure.
